# EUROPEAN PATENT SPECIFICATION

(11) **EP 2 029 801 B1**
(45) Date of publication and mention of the grant of the patent: **06.04.2011**
(21) Application number: 07726046.1
(22) Date of filing: 18.06.2007
(51) Int. Cl.: D03D 49/02, D03D 49/60, D03J 1/22, F16B 7/18, F16B 37/04

(54) **CLAMPING ARRANGEMENT FOR CLAMPING A COMPONENT ONTO A HOLDER IN A WEAVING MACHINE**
KLEMMVORRICHTUNG ZUM KLEMMEN EINER KOMPONENTE AUF EINEN HALTER EINER WEBMASCHINE
AGENCEMENT DE SERRAGE POUR SERRER UN COMPOSANT SUR UN SUPPORT DANS UNE MACHINE À TISSER

(30) Priority: 19.06.2006 BE 200600332
(43) Date of publication of application: 04.03.2009
(73) Proprietor: Picanol, 8900 Ieper (BE)
(72) Inventor: MEYNS, Ignace, B-8647 Reninge (BE); HOORELBEKE, Wim, B-8920 Langemark (BE)
(74) Representative: Patentanwälte Ruff, Wilhelm, Beier, Dauster & Partner
(86) International application number: PCT/EP2007/005335
(87) International publication number: WO 2007/147541

(56) References cited:
- EP-A1- 0 395 132
- US-A- 3 800 835

## Description

The invention relates to a clamping arrangement for clamping a component onto a holder in a weaving machine, according to the introductory part of claim 1.

Weaving machines are known in which a number of components are fastened to a holder and are removed from a holder. Such components are, for example, a reed, auxiliary blowers or main blowers which are fitted onto a holder of the sley, or a cloth support or temple, which are fitted onto a holder of the frame of the weaving machine. A cloth support and temples are elongated components which are provided in dependence on the chosen cloth to be woven.

The direct clamping of components with a bolt joint onto a holder which is arranged on the frame of the weaving machine is known from, for example, US 3 800 835. In this embodiment, the load is principally absorbed by the bolt joint. The clamping arrangement is subject to a large load during the weaving and can be damaged during the fitting of components onto the holder or during their removal.

From EP 395 132, it is known to use a clamping element in the shape of a dovetail for the removable fitting of an auxiliary blower onto a sley. This offers the advantage that, if the clamping element becomes worn, for example as a result of the frequent fitting or removal or as a result of the large loads to which the clamping element is exposed, the clamping element can easily be replaced. The dovetail joint also offers larger clamping surfaces, whereby high pressures are prevented and a better connection is assured. Moreover, the clamping element can be displaced in the holder in a continuously variable manner in the longitudinal direction, so that an auxiliary blower can be positioned in a manner which is tailored to the cloth to be woven. Since the clamping element is located beneath the support of the auxiliary blower, the bolt for clamping the auxiliary blower onto the sley is screwed into the clamping element. An auxiliary blower comprises a narrow support and a clamping element of, for example, two cm length and requires only one bolt. Elongated components such as a temple or a cloth support require, however, that a plurality of bolts, distributed over the longitudinal direc- tion of the component, are fitted into the clamping element. Since the clamping element needs to be arranged beneath these components, it is not easy to screw a plurality of bolts into such a clamping element.

It is known from FR 2345610, more particularly as represented in figure 3, to firstly fit the removable clamping element into a holder, then to tilt the component to be fastened between the clamping element and the holder, and then to fit the bolts which cooperate with the clamping element to fasten the component to the holder. This offers the advantage that the bolts do not have to be screwed into the clamping element beforehand. This embodiment is less suitable, however, for fastening elongated components such as a temple or a cloth support, since this tilting movement, in elongated components, can cause these compo- nents and/or the holder to become damaged or deformed.

One object of the invention is to form a clamping arrangement for clamping a component onto a holder in a weaving machine, wherein the component can be fitted onto a holder or removed from a holder easily and quickly with a simple clamping element.

This object is achieved by claim 1.

The clamping arrangement according to the invention comprises a positioning slot which is provided in the clamping groove of the holder in the longitudinal direction of the clamping arrangement and comprises surfaces which can cooperate with the clamping element to hold a clamping element, arranged in the positioning slot, before the component is clamped onto the holder and/or after the component has been removed from the holder.

The clamping arrangement according to the invention offers the advantage that the clamping element, after having been fitted into the positioning slot, is held in the positioning slot under the influence of gravity, so that an elongated component can be fitted onto the holder or removed from the holder without hindrance and without risk of deforma- tion or damage.

The clamping arrangement offers the advantage that the clamping element remains held in a well-defined angular position in the positioning slot, whereby the openings in the clamping element for the reception of the bolts, for example, remain held in a specific angular position, for example remain held in a roughly vertical position.

The clamping element can comfortably be fitted transversely into the positioning slot or transversely removed from the positioning slot. The clamping element can thereby, in fact, be freely removed from a frame of the weaving machine, so that the elements placed to the left or right of the clamping arrangement do not have to be removed. This is particularly advantageous in a weaving machine which is already provided with elements to perform a specific function during weaving.

The clamping arrangement according to the invention allows the clamping element to be held in a well-defined angular position while it is fitted into the positioning slot, so that, for example, the openings in the clamping element for the reception of the screw elements remain in a specific angular position, for example remain roughly vertical during the fitting and also after the fitting. The surface of the positioning slot and the clamping surface of the clamping groove are arranged roughly parallel or at an angle, for example, so that the transverse fitting or removal of the clamping element is not hindered. According to the invention, the positioning slot comprises surfaces which can cooperate with corresponding surfaces of a clamping element to align a clamping element, arranged in the positioning slot, with respect to the axis of the screw elements which can be fitted through openings in the component. The invention offers the advantage that the openings in the clamping element are perfectly aligned for the reception of the screw elements with respect to the screw elements to be fitted. Particularly where a large number of screw elements are fitted, this ensures a certain time gain whenever a component is fitted onto or removed from the holder.

According to a preferred embodiment, the cross section of the clamping element is a hexagon. This clamping element is simple to produce, comprises at the top the trapezium shape suitable for the clamping effeet, comprises two parallel surfaces suitable for guiding the clamping element as it is fitted into the positioning slot, and comprises at the bottom likewise a trapezium shape suitable for holding the clamping element in the positioning slot and for aligning the clamping element in the positioning slot with respect to the axis of the screw elements to be fitted.

According to one embodiment, a method for clamping a component onto a holder in a weaving machine, using a clamping arrangement according to the invention, is implemented as follows: the clamping ele- ment is fitted transversely into a positioning slot and then the component and the screw elements are fitted, whereupon the screw elements, through openings in the component, can cooperate with the clamping element to clamp the component onto the holder. The transverse fitting of the clamping element onto the holder is particularly advantageous with respect to the sideways insertion of the clamping element into the holder if the clamping element has to be fitted onto a weaving machine which is already provided with elements placed to the left or right of the clamping arrangement, since the clamping element can then be fitted into the frame of the weaving machine without hindrance by elements placed alongside the clamping element.

According to one embodiment, a method for removing a component arranged on a holder in a weaving machine, using a clamping arrangement according to the invention, is implemented as follows: the screw elements cooperating with the clamping element and the component through openings in the component are removed, and then the clamping element is removed transversely from the positioning slot. The screw elements are here loosened prior to the removal and are preferably removed together with the component. The transverse removal of the clamping element from the holder is particularly advantageous with respect to the sideways withdrawal of the clamping element from the holder if the clamping element has to be removed from a weaving machine which is already provided with elements placed to the left or right of the clamping arrangement, since the clamping element can then be removed from the frame of the weaving machine without hindrance by elements placed alongside the clamping element.

The invention additionally relates to a weaving machine which makes use of a clamping arrangement according to the invention and which is suitable for implementing a method according to the invention.

Further characteristics and advantages of the invention emerge from the following description of the illustrative embodiments represented in the drawings and from the subclaims, wherein:
figure 1 shows a side view of a clamping arrangement according to an invention;
figure 2 shows a perspective representation of an embodiment according to figure 1;
figure 3 shows schematically a detail from an embodiment according to figure 1 in the clamped state;
figure 4 shows schematically a detail from an embodiment according to figure 1 in the non-clamped state;
figure 5 shows schematically a detail from the embodiment according to figure 3 without the component;
figure 6 shows a perspective representation of an embodiment according to figure 1 ;
figure 7 shows a side view of a variant embodiment of a clamping arrangement according to the invention;
figures 8 to 20 with the exception of Fig. 12 and 13 show schematically different variant embodiments of a clamping arrangement according to the invention.

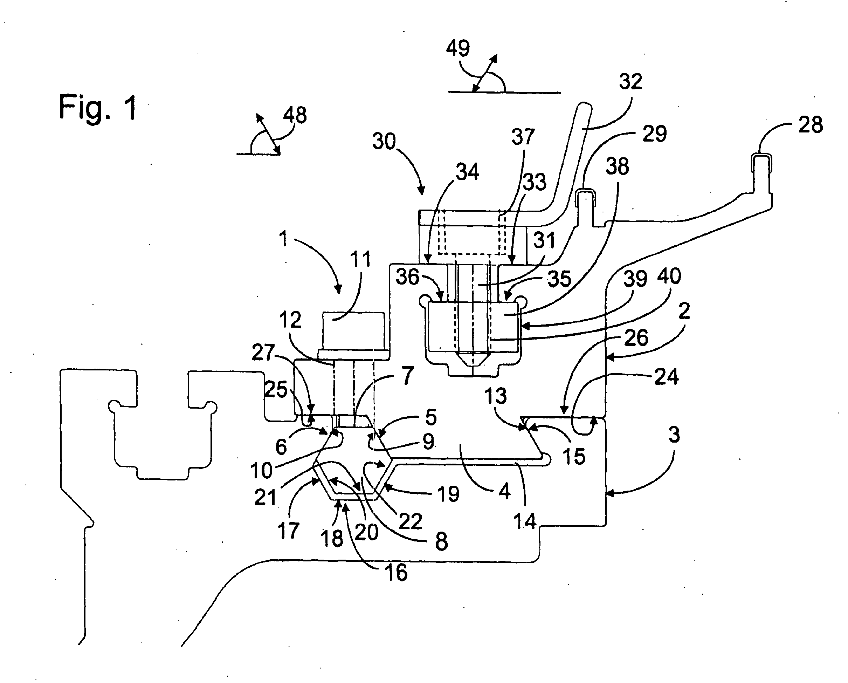

In figure 1 , a clamping arrangement 1 according to the invention for clamping a component 2 for a weaving machine onto a holder 3 is represented schematically. The holder 3 is in turn fastened to the frame of a weaving machine. The component 2 as represented in figure 1 concerns a cloth support. Such a cloth support is provided to support the cloth and comprises, inter alia, profiles 28 and 29. The elongated component 2 extends over the width of the weaving machine, that is to say, for example, over a length of more than two meters.

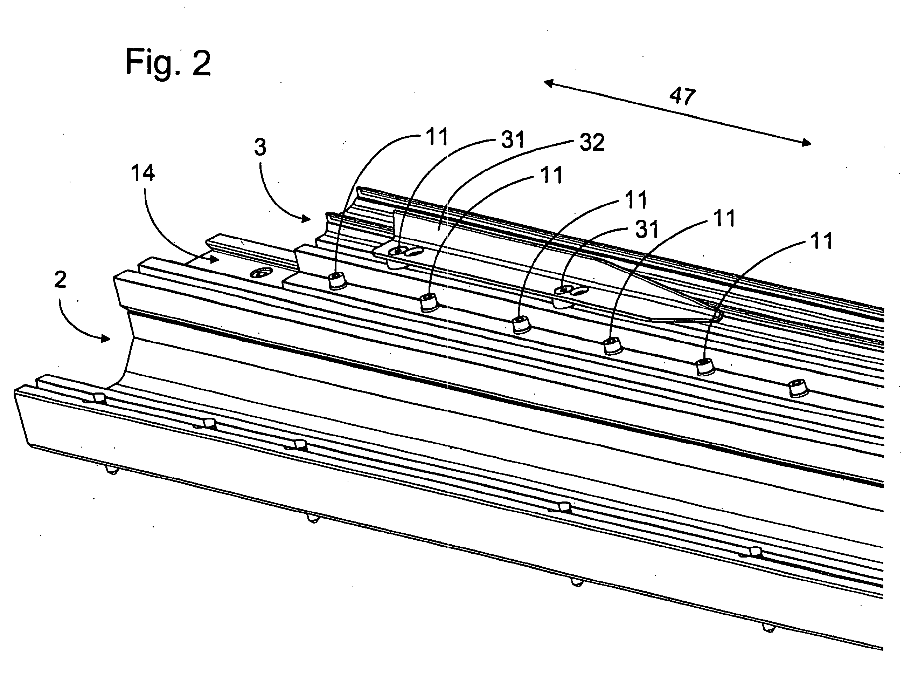

A perspective view of the embodiment as represented in figures 1 to 5 is represented in figure 2. Here a large number of screwing elements 11 , distributed in the longitudinal direction 47 of the component 2, can clearly be seen. The screw elements 1 1 are here formed by bolts.

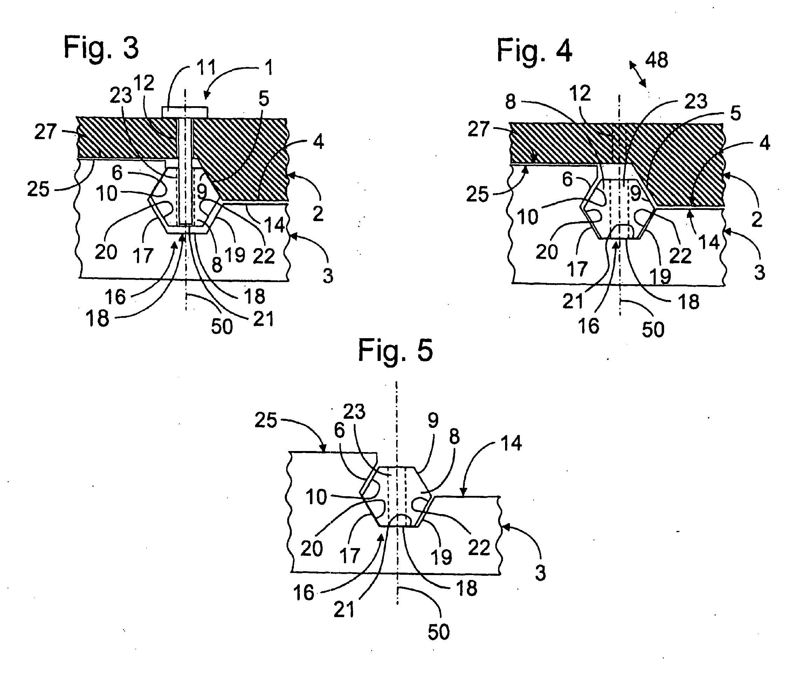

In the state as represented in figures 1 and 3, the component 2 is clamped in the holder 3 by means of the clamping arrangement 1. The clamping arrangement 1 comprises a clamping element 8 of hexagonal cross section with internally threaded openings 23 in which there are screwed screw elements 11, which, in the represented illustrative embodiment, are fitted roughly vertically through openings 12 in the component 2. A number of screw elments 11, distributed in the longitudinal direction 47 of the clamping arrangement 1, are provided, for example one bolt every ten cm. For a component 2 of more than two meters, this gives rise to a clamping arrangement 1 with more than twenty screw elements 11. Through the tightening of the screw elements 11, the clamping element 8, as represented in figure 1, is clamped with the obliquely arranged clamping surface 9 against the corresponding clamping surface 5 of the clamping tooth 4 of the component 2 and with the obliquely arranged clamping surface 10 against the corresponding clamping surface 6 of the holder 3. As a result, the obliquely arranged clamping surface 13 of the clamping tooth 4 of the component 2 is clamped against the corresponding clamping surface 15 of the clamping groove 14 of the holder 3. The clamping element 8 further comprises a surface 7 that is directed toward the component 2. The clamping tooth 4 of the component 2 forms together with the clamping element 8 a wedge of roughly trapezoidal section which is clamped into the clamping groove 14 of corresponding roughly trapezoidal section and thus forms a dovetail joint, whereby the, in the represented illustrative embodiment, roughly horizontal fastening surfaces 26, 27 of the component 2 are clamped onto the corresponding, in the represented illustrative embodiment, roughly horizontal supporting surfaces 24, 25 of the holder 3. In this way, the component 2 is clamped firmly onto the holder 3 and can offer resistance to the high load to which this component 2 is exposed.

As represented in figures 1 to 5, in the clamping groove 14 of the holder 3 there is provided a positioning slot 16. According to this illustrative embodiment, the positioning slot 16 comprises a roughly trapezoidal cross section formed by surfaces 17, 18 and 19, which respectively can cooperate with the lowermost surfaces 20, 21 and 22 of the hexagonal clamping element 8. Before the fitting or after the removal of the screw elements 11, as represented in figure 4, the clamping element 8 is held in this positioning slot 16 under the influence of gravity. In this non-clamped state, wherein the clamping element 8 is held in the positioning slot 16, there is a secure play present between the clamping surface 9 of the clamping element 8 and the clamping surface 5 of the clamping tooth 4 of the component 2. The clamping tooth 4 of the component 2 can here be fitted into the clamping groove 14 of the holder 3 or removed therefrom not hindered. For the illustrative embodiment represented in figures 1 to 5, this can be done by moving the clamping tooth 4 of the component 2 roughly in the transverse direction 48 into or out of the clamping groove 14. That is to say roughly parallel with the obliquely arranged surfaces 5 and 13 of the clamping tooth 4 and with the obliquely arranged surface 9 of the clamping piece 8 and the obliquely arranged surface 15 of the clamping groove 14.

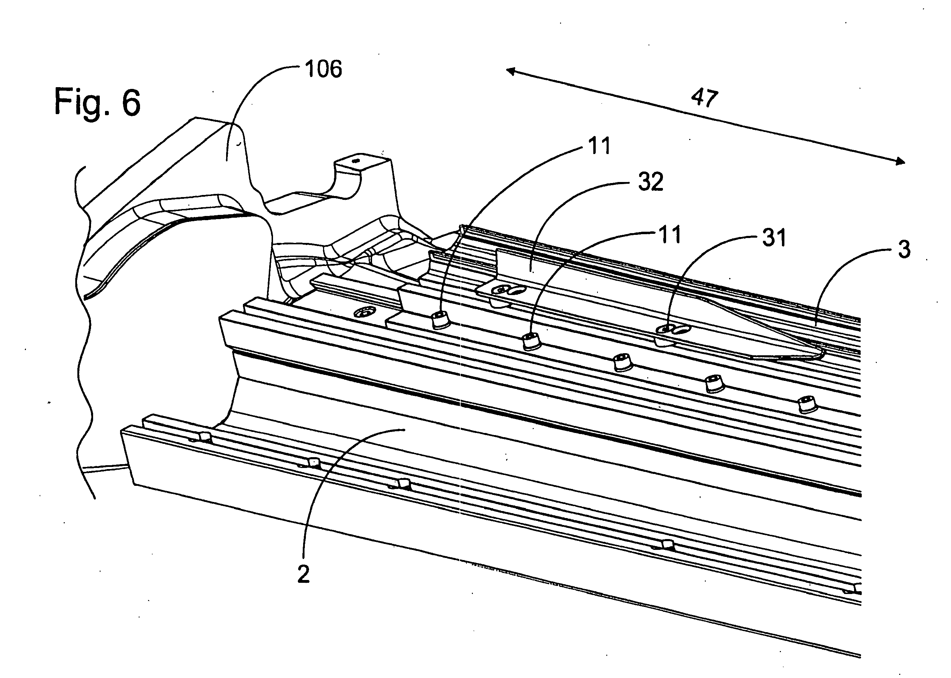

In the represented illustrative embodiment, the clamping surfaces 5, 13, 9 and 15 respectively are arranged at an angle of roughly 60° with respect to the supporting surfaces 24, 25 of the holder 3, which, in the represented embodiment, are arranged horizontally. The created play between the clamping surface 9 of the clamping element 8 and the clamping surface 5 of the clamping tooth 4 of the component 2, as represented in figure 4, is also advantageous, however, when the component 2 is fitted by sliding the clamping tooth 4 in the longitudinal direction 47 into the clamping groove 14 of the holder 3. This method cannot however be used if, as represented in figure 6, on both sides of the holder 3 elements 106 of the weaving machine are provided, which prevent the component 2 from being fitted onto the holder 3 in the longitudinal direction 47.

The hexagonal clamping element 8 of the illustrative embodiment as represented in figures 1 to 5 rests under the influence of gravity in the non-clamped state, as represented in figure 4, with the horizontal surface 21 on the horizontal surface 18 formed by the base of the positioning slot 16. Moreover, the oblique surfaces 17 and 19 of the positioning slot 16, which are arranged in accordance with the oblique surfaces 20 and 22 of the clamping element at an angle of roughly 60° with respect to the horizontal supporting surfaces 24, 25 of the holder, prevent the clamping element 8 from being able to tilt or the clamping element 8 from shifting significantly transversely in the direction of the cloth. Hence the openings 23 of the clamping element 8 remain, even in the non-clamped state as represented in figure 4, assuredly arranged in a roughly angular position. Moreover, in the represented illustrative embodiment, the trapezoidal cross section of the positioning slot 16, which is roughly consistent with the trapezoidal shape of the bottom half of the hexagonal cross section of the clamping element 8, ensures that the clamping element 8, and thus the openings 23 provided therein, are aligned with respect to the openings 12 in the holder 2 in which the screw elements 11 are arranged with sufficient play. The clamping element 8 is not thereby hindered when it is moved, by the screwing on of the screw elements 11, from a non-clamped state, as represented in figure 4, to a clamped state, as represented in figures 1 and 3. The clamping element 8 here continues to maintain its orientation.

The hexagonal clamping element 8 as represented in figures 1 to 5 can be moved in the transverse direction 49, roughly parallel with the oblique surface 19 of the positioning slot 16, that is to say at an angle of roughly 60° with respect to the horizontal supporting surfaces 24, 25 of the holder 3, into or out of the positioning slot 16, before the fitting or after the removal of the component 2, which latter case is represented in figure 5. The oblique surface 22 of the clamping element 8 can here be guided by the corresponding oblique guide surface 19 of the positioning slot 16, so that the clamping element 8, when fitted into the positioning slot 16, moves under the influence of gravity obliquely downward until the horizontal surface 21 of the clamping element 8 rests on the horizontal surface 18 of the positioning slot 16. During this movement, the clamping surface 6 of the clamping groove 14, which is arranged roughly parallel to the oblique guide surface 19 of the positioning slot 16, ensures that the clamping element 8 cannot tilt as it is introduced into the positioning slot 16, since the surface 6 and the guide surface 19, which are arranged roughly parallel with each other, respectively cooperate with the clamping surface 10 and the surface 22, which clamping surfaces are arranged roughly parallel with each other. Hence, in the represented illustrative embodiment, the openings 23 in the clamping element 8 assuredly continue to be arranged roughly vertically, even during fitting into the positioning slot 16. The presence of the obliquely arranged guide surface 19 is likewise advantageous in the removal of the elongated clamping element 8 from the positioning slot 16 in the transverse direction 49, since, in the obliquely upward movement, the clamping element 8 is supported and guided by the guide surface 19.

As represented in figure 1, a second component 32 is arranged onto the component 2. This second component 32 is, for example, a so-called temple platform that can be fastened close to a temple (not represented). Such a component 32 has a length of roughly ten cm up to fifty cm and is fastened with at least two bolts 31. The second component 32 is fastened to the component 2 by means of a known clamping arrangement 30. The second component 32 is provided with openings 37, in which bolts 31 are fitted which can cooperate with internally threaded openings 40 in the mounting element 38. Through the tightening of the bolts 31, the mounting element 38 introduced into the T-groove 39 is clamped against the horizontal clamping surfaces 35 and 36 of the T-groove 39, whereby the second component 32 is clamped onto the horizontal supporting surfaces 33, 34 of the component 2. It is clear that the mounting element 38 can easily be introduced in the longitudinal direction 47 into the T-groove 39. The horizontal clamping surfaces 35, 36 of the known clamping arrangement 30 have a significantly smaller surface than the clamping surfaces 6, 15 of the clamping arrangement 1 according to the invention, whereby the clamping arrangement 1 according to the invention can be exposed to high loads without risk of high pressures or damage to the clamping surfaces of the clamping arrangement 1, not even if the clamping arrangement 1 is fitted and removed frequently. The horizontal arrangement of clamping surfaces 35, 36 of the known clamping arrangement 30 is also less suited to offering resistance to loads in this horizontal direction. It is clear that the clamping arrangement 1 according to the invention positions the component 2 clearly transversely on the holder 3, whilst in the known clamping arrangement 30 uncertainty exists as regards the transverse position of the second component 32 on the component 2 in the clamped state.

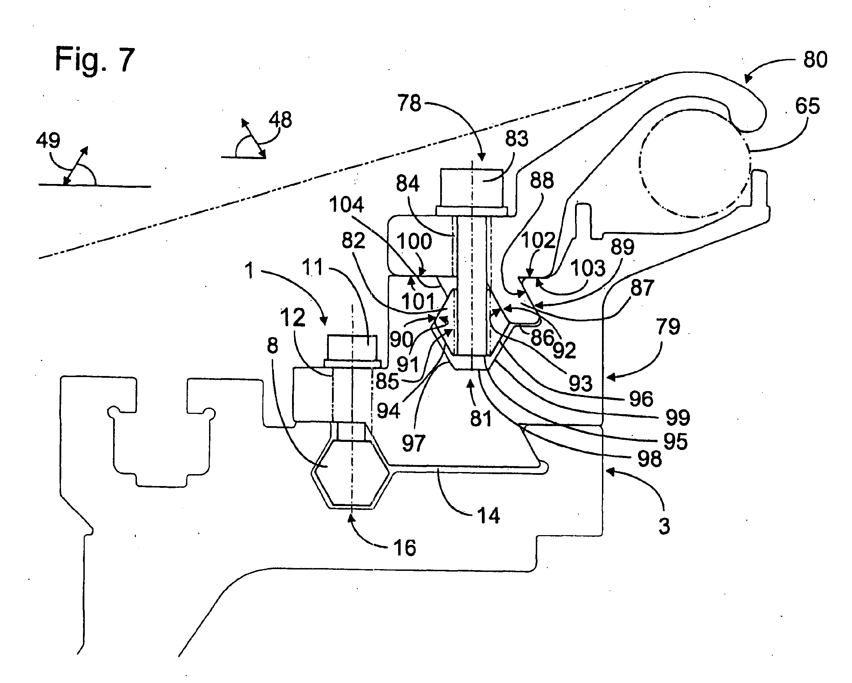

In figure 7, a variant embodiment is represented, wherein two clamping arrangements 1, 78 according to the invention are used. The clamping arrangement 1 of figure 7 is used for the fastening of a component 79 to a holder 3 and is constructed similarly to the clamping arrangement 1 of figure 1. A second component 80 is likewise fastened with a clamping arrangement 78 according to the invention to the component 79, which here additionally acts as the holder. The second component 80 forms the cover of a bar type temple, which comprises a temple bar 65 and, just like the component 79, extends in the longitudinal direction 47 of the holder 3 over roughly the full width of the weaving machine. The clamping arrangement 78 for clamping the second component 80 comprises a clamping element 82 of hexagonal cross section with internally threaded openings 85 in which there are screwed screw elements 83, formed by bolts, which are fitted roughly vertically through openings 84 in the second component 80. A number of screw elements 83, distributed over the length of the clamping arrangement 78, are provided, for example one screw element or bolt every twenty cm. For a component 80 of more than two meters, this thus gives rise to a clamping arrangement 78 with more than ten screw elements 83. Through the tightening of the screw elements 83, the clamping element 82, as represented in figure 7, is clamped with the obliquely arranged clamping surface 93 against the corresponding clamping surface 92 of the clamping tooth 87 of the second component 80 and with the obliquely arranged clamping surface 91 against the corresponding clamping surface 90 of the component 79. As a result, the obliquely arranged clamping surface 88 of the clamping tooth 87 of the second component 80 is clamped against the corresponding clamping surface 89 of the clamping groove 86 of the component 79. The clamping tooth 87 of the second component 80 forms together with the clamping element 82 a wedge of roughly trapezoidal cross section, which is clamped into the clamping groove 87 of corresponding, roughly trapezoidal cross section and thus forms a dovetail joint, whereby the horizontal fastening surfaces 100, 102 of the second component 80 are clamped onto the corresponding horizontal supporting surfaces 101, 103 of the component 79. In this way, the second component 80 is firmly clamped onto the component 79 and can offer resistance to the high load to which this second component 80 is exposed.

The positioning slot 81 and the associated clamping element 82 for the fastening of the second component 80 are shaped similarly to the corresponding positioning slot 16 and the associated clamping element 8 for the fastening of the component 79. In the non-clamped state, for example after the removal of the screw elements 83, the surfaces 97, 98 and 99 of the positioning slot 81 cooperate with the correspondingly arranged surfaces 94, 95 and 96 of the clamping element 82, so that the clamping tooth 87 can be removed from the clamping groove 86 roughly in the transverse direction 48.

In contrast to the clamping arrangement 1 for the fastening of the component 79 to the holder 3, the clamping element 82 cannot be removed from the clamping groove 86 in the transverse direction 49. Since the clamping groove 86 is less wide than the clamping groove 14, the clamping surface 89 of the clamping groove 86 forms an obstacle hereto. In order to enable the transverse removal and fitting of the clamping element 82, an obliquely arranged surface 104 has been provided parallel to this clamping surface 89. According to this illustrative embodiment, the surface 104 and the clamping surface 89 are provided roughly at an angle of 60° in the direction 48 or 49 with respect to the horizontally arranged supporting surfaces 101, 103. It is thus possible to remove the clamping element 82 from the clamping groove 86 by first displacing the clamping element 82 roughly in the transverse direction 49 until this displacement is prevented by the clamping surface 89, and then displacing the clamping element 82 roughly in the transverse direction 48, that is to say roughly parallel to the clamping surface 89 and the surface 104. In this embodiment, the component 79, in the light of a clamping arrangement according to the invention, can be referred to as the holder onto which the component 80 is clamped.

According to a non-represented illustrative embodiment, the second component 80 can also however be a second component such as the second component 32 represented in figure 1, or another component that can be fastened to the component 79.

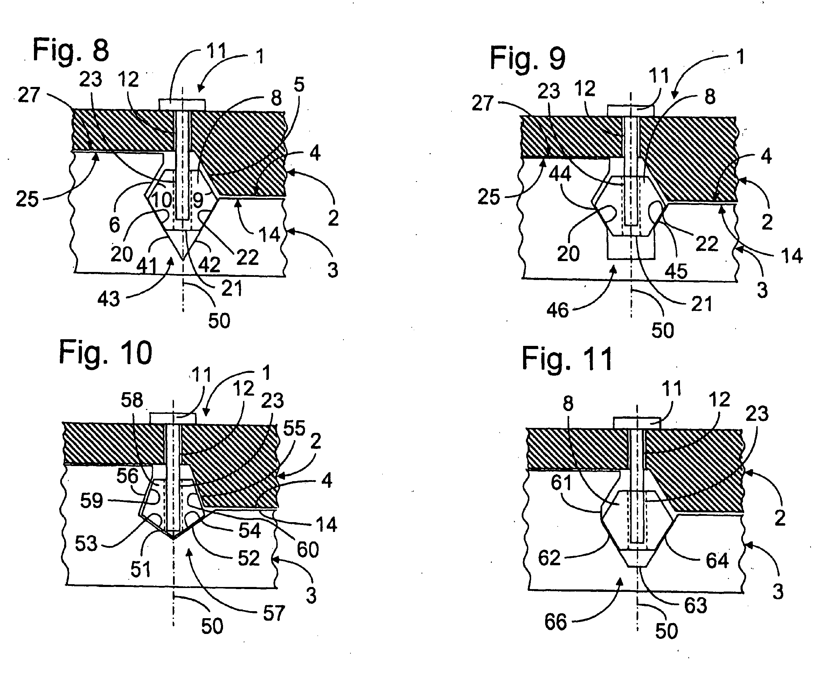

In figure 8, a clamping arrangement 1 according to the invention is represented, wherein the positioning slot 43 exhibits a triangular cross section. In the non-clamped state, as represented in figure 8, the clamping element 8 rests under the influence of gravity with the obliquely arranged surfaces 20, 22 on the corresponding obliquely arranged surfaces 41, 42 of the positioning slot 43. The surfaces 41, 42 of the positioning slot 43 are arranged such that they align the clamping element 8 fitted in the positioning slot 43 perfectly with respect to the screw elements 11. That is to say that, in this embodiment, the roughly vertically arranged axes 50 of the openings 12 in the component 2, the openings 23 in the clamping element 8 and the screw elements 11 coincide. As a result, the screw elements 11, which are fitted through the openings 12 in the component 2, are perfectly aligned to be screwable into the openings 23 of the clamping element 8. This makes it possible to screw a large number of bolts 11 rapidly into the clamping element 8, or possibly to automatize the fitting of the screw elements 11.

In figure 9, a clamping arrangement 1 according to the invention is represented, wherein the positioning slot 46 exhibits a cross section in the form of a polygon. In the non-clamped state, as represented in figure 9, the clamping element 8 rests under the influence of gravity with the obliquely arranged surfaces 20, 22 on the corresponding obliquely arranged surfaces 44, 45 of the positioning slot 46. The surfaces 44, 45 of the positioning slot 46 are arranged such that they align the clamping element 8 fitted in the positioning slot 46 perfectly with respect to the screw elements 11.

In figure 10, a clamping arrangement 1 according to the invention is represented, having a positioning slot 57 of triangular cross section analogous to the illustrative embodiment as represented in figure 5. The clamping element 58 here exhibits a pentagonal cross section. In accordance with the illustrative embodiment as represented in figure 5, the obliquely arranged surfaces 51, 52 of the positioning slot 57 cooperate with correspondingly obliquely arranged surfaces 53, 54 to align the fitted clamping element 58 perfectly with respect to the screw elements 11. Furthermore, in the clamped state, the clamping surface 56 of the clamping groove 14 of the holder 3 and the clamping surface 55 of the component 2 cooperate with the corresponding clamping surfaces 59, 60 of the clamping element 58. The obliquely arranged surface 52 of the positioning slot 57 is suitable for guiding the corresponding obliquely arranged surface 54 of the pentagonal clamping element 58 as this clamping element 58 is transversely fitted into or removed from the positioning slot 57. Moreover, the surface 52 of the positioning slot 57 for guiding the clamping element 58 and the clamping surface 56 of the clamping groove 14 of the holder 3 form an acute angle which, as can be seen in figure 10, widens in the direction of the opening along which the clamping element 58 can be moved transversely in the positioning slot 57. The clamping element 58 can hence comfortably be moved transversely into and out of the positioning slot 57. As the clamping element 58 is fitted into the positioning slot 57, the obliquely arranged surface 52 of the positioning slot 57, together with the obliquely arranged clamping surface 56 of the clamping groove 14, ensures that the clamping element 58 cannot tilt, since the surface 52 and the clamping surface 56 respectively cooperate with corresponding surfaces 54 and 59 of the clamping element 58. It can thereby be assured that, during the fitting of the clamping element 58, the openings 23 in the clamping element 58 maintain their roughly angular position.

In figure 11 , a variant embodiment of the clamping arrangement 1 according to the invention is represented. The cross section of the positioning slot 66 is a polygon formed by a vertically arranged surface 61 , a horizontally arranged surface 63 and two obliquely arranged surfaces 62 and 64. Analogously to the illustrative embodiment as represented in figure 5, the two obliquely arranged surfaces 62, 64 of the positioning slot 66 cooperate with two correspondingly obliquely arranged surfaces of the hexagonal clamping element 8 to align the clamping element 8 fitted in the positioning slot 66 perfectly with respect to the positioning slot 66 and the screw elements 11.

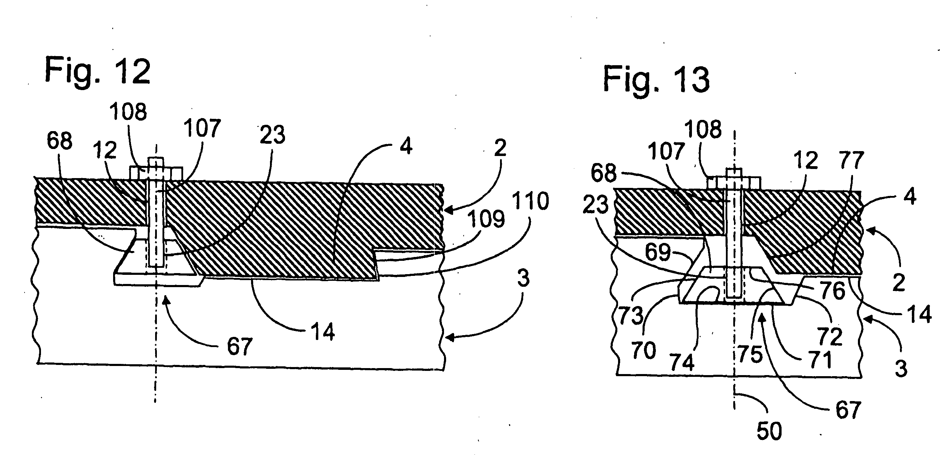

In figures 12 and 13, a further variant embodiment of the clamping arrangement 1 which does not form part of the invention is represented, having a trapezoidal clamping element 68. According to this embodiment, the clamping arrangement 1 comprises screw elements 105 comprising a threaded rod 107 which can cooperate with a nut 108. This clamping element 68 likewise comprises two obliquely arranged clamping sur- faces 73, 75, which respectively cooperate with a clamping surface 69 of the holder 3 and a clamping surface 77 of the component 2. The clamping element 68 additionally comprises a surface 76 directed toward the component 2. In the clamping groove 14 of the holder 3 there is likewise provided a positioning slot 67. This positioning slot 67 is formed by the vertically arranged surface 70, the horizontally arranged surface 71 and the obliquely arranged surface 72. As represented in figure 13, the clamping element 68 can be fitted transversely into the positioning slot 67, where in the non-clamped state, under the influence of gravity, it rests with the horizontal surface 74 on the corresponding horizontal surface 71 of the positioning slot 67. The surfaces 70 and 72 delimit the positioning slot 67 such that the fitted clamping element 68 is positioned roughly correctly with respect to the threaded rods 107 to be fitted. The threaded rods 107 are screwed through the openings 12 in the component 2 into the openings 23 in the clamping element 68. After this, the nuts 108 are screwed onto the threaded rods to move the clamping element 68 up to the component 2.

It is also possible to secure the threaded rods 107 in the openings 23 in the clamping element 68, for example by gluing them in place or fixing them in some other way. The clamping element 68 can then, together with the threaded rods 107, be moved as a whole into and out of the positioning slot 67. According to one option, the component 2 can be provided with a slot extending in the longitudinal direction 47, instead of having separate openings 12 for each threaded rod 107. As represented in figure 12, the clamping surface 109 of the clamping tooth 4 and the corresponding clamping surface 110 of the clamping groove 14 are, in this embodiment, arranged at a specific small angle to the vertical, which is advantageous for the clamping of the clamping tooth 4 in the clamping groove 14. According to a non-represented variant, in the embodiment of figure 12 the clamping surfaces 109 and 110 can also be arranged roughly vertically.

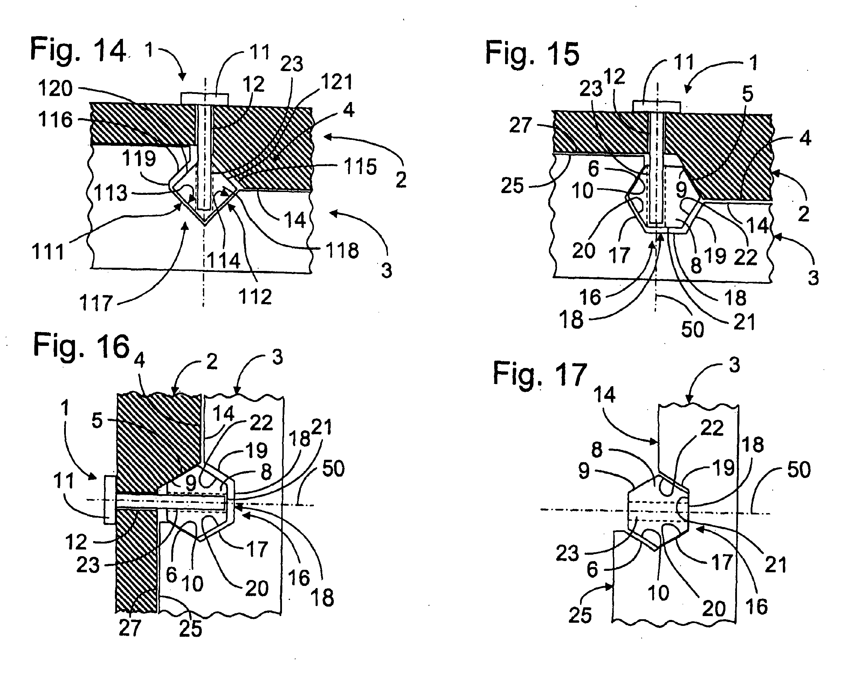

In figure 14, a clamping arrangement 1 according to the invention is represented, having a positioning slot 117 of a cross section comprising a vertically arranged surface 119 and two obliquely arranged surfaces 111 and 112. The clamping element 118 here exhibits a quadrilateral cross section, more particularly a square cross section. Similarly to the illustrative embodiment of figure 8, the obliquely arranged surfaces 111, 112 of the positioning slot 117 cooperate with corresponding obliquely arranged surfaces 113, 114 of the clamping element 118, in order to align a fitted clamping element 118 perfectly with respect to the screw elements 11. Furthermore, in the clamped state, the clamping surface 116 of the clamping groove 14 of the holder 3 and the clamping surface 115 of the component 2 cooperate with the corresponding clamping surfaces 120, 121 of the clamping element 118. The obliquely arranged surface 112 of the positioning slot 117 is suitable for guiding the corresponding obliquely arranged surface 114 of the quadrilateral clamping element 118 as this clamping element 118 is transversely fitted into or removed from the positioning slot 117. Moreover, the surface 112 of the positioning slot 117 for guiding the clamping element 118 and the clamping surface 116 of the clamping groove 14 of the holder 3 are arranged roughly parallel with each other. The clamping element 118 can hence comfortably be moved transversely into and out of the positioning slot 117 and it is ensured that, during the fitting of the clamping element 118, the openings 23 in the clamping element 118 maintain their roughly angular position. It is clear that, instead of a square, any other quadrilateral whatsoever can be used as the clamping element.

In figure 15, a variant embodiment of a clamping arrangement 1 according to the invention is represented in accordance with the illustrative embodiment as represented in figure 3. In figure 15, the openings 23 are not provided centrally in the hexagonal clamping element 8, but, in particular, these openings 23 are provided somewhat eccentrically.

In figures 16 and 17, an embodiment of a clamping arrangement 1 according to the invention is represented in accordance with figures 3 and 5, the clamping arrangement 1 being represented in an angular position which is turned approximately 90° with respect to the angular position represented in figures 3 and 5.

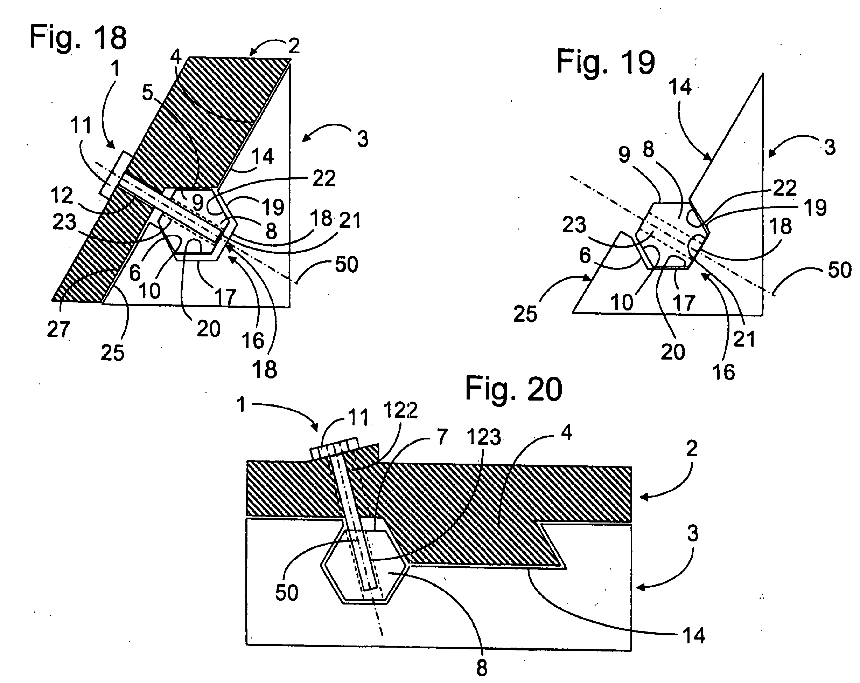

In figures 18 and 19, an embodiment of a clamping arrangement 1 according to the invention is represented in accordance with figures 3 and 5, the clamping arrangement 1 being represented in an angular position which is turned approximately 60° with respect to the angular position represented in figures 3 and 5. It is clear that non-represented variant embodiments are possible, wherein a clamping arrangement 1 has been turned through any other angle whatsoever, the clamping element 8 being able to be held in a clamping groove 16.

In figure 20, a further variant embodiment of a clamping arrangement 1 according to the invention is represented in accordance with the embodiment as represented in figure 3, wherein the axis 50 of the screw elements 11 and the openings 122 in the component 2 and the openings 123 in the clamping element 8 are provided at an angle to the perpendicular on the roughly horizontal surface 7 of the hexagonal clamping element 8.

It is clear that, according to a non-represented variant, the screw element 11 can be arranged both non-centrally, analogously to figure 15, and also at an angle, analogously to figure 20.

Other combinations of clamping elements and associated positioning slots are, of course, possible. More particularly, in addition to clamping elements of trapezoidal, pentagonal and hexagonal cross section, clamping elements of some other cross section, for example heptagonal, octagonal, square or any other polygon whatsoever, are also conceivable. A clamping element 8 of hexagonal cross section can be simply and cheaply produced.

It is clear that a pentagonal or hexagonal clamping element as represented in figure 1 to 9 is particularly advantageous, since the openings 23 in the clamping element which are provided with an internal thread for the reception of the screw elements 11 exhibit approximately twice the length of the available openings 23 in the case of a trapezoidal clamping element with corresponding clamping surfaces. This ensures a better connection between the clamping element and the screw elements.

The clamping arrangement 1 according to the invention enables an elongated component 2 for a weaving machine to be clamped onto a holder 3 by first fitting the clamping element 8 transversely into a positioning slot 16, then fitting the component 2 onto the holder 3, and then fitting the screw elements 11 through openings 12 in the component 2 so as to screw them into openings 23 of the clamping element 8. The clamping arrangement 1 according to the invention also allows an elongated component 2 for a weaving machine, which component is clamped on a holder 3, to be removed from this holder 3 by unscrewing the bolts 11 from the clamping element 8, then removing them through openings 12 in the component 2, then removing the component 2 from the holder 3, and then transversely removing the clamping element 8 from the positioning slot 16 and the holder 3.

The screw elements 11, 83, 105 are not limited to the represented bolts or threaded rods but can likewise comprise other elements, for example hexagon socket bolts or screwed bushes. According to a non-represented variant, instead of separate openings 12 in the component, a slot extending in the longitudinal direction 47 can be provided.

In figures 3 and 4 and in figures 8 to 13, the component 2 has been arranged, for the sake of clarity, at a short distance from the holder 3. In these positions, in actual fact, the component 2 is supported on the holder 3 in a manner as represented in figure 1. The screw elements 11, 83, 105 can move with sufficient play in the openings 12, 84, 122, so that the screw elements can easily be screwed into the clamping element should the component 2 be arranged on the holder 3, more particularly should the component 2 be arranged in a position on the holder 3 which is approximately consistent with the clamping position of the component 2 on the holder 3.

The weaving machine, the clamping arrangement for the clamping, and the methods according to the invention are not limited, of course, to the embodiments described by way of example and represented in the figure, but can be realized within the scope of the invention, as defined by the appending claims, according to different variants and according to different combinations of the aforesaid represented embodiments according to the invention.

## Claims

1. A clamping arrangement for clamping a component (2, 79; 80) onto a holder (3, 79) of a weaving machine, comprising at least one clamping element (8, 82, 58, 68, 118) arrangable in a clamping groove (14, 86) of the holder (3, 79) and screw elements (11, 83, 105) for fixing said clamping element (8, 82, 58, 68, 118), **characterized in that** the clamping groove (14, 86) is provided with a positioning slot (16, 81, 43, 46, 57, 66, 67, 117) extending in a longitudinal direction of the clamping groove (14, 86) and comprising surfaces (41, 42, 44, 45, 51, 52, 62, 64, 111, 112) which can cooperate with corresponding surfaces (20, 22, 53, 54, 113, 114) of the at least one clamping element (8, 82, 58, 118) to align said clamping element (8, 82, 58, 118), arranged in the positioning slot (43, 46, 57, 66, 117), with respect to the axis (50) of the screw elements (11, 83, 105) which can be fitted through openings (12, 122) in the component (2, 79, 80), while the screw elements (11, 83, 105) are loosend, which at least one clamping element (8, 82, 58, 68, 118) also has clamping surfaces one of which cooperating with the component (2, 79; 80) and one of which cooperating with the holder (3, 79) while the screw elements (11, 83, 105) are tightened.

2. The clamping arrangement as claimed in claim 1, **characterized in that** the clamping element (8, 82, 58, 68, 118) comprises a first clamping surface (10, 91, 59, 73, 120) and a second clamping surface (9, 93, 60, 75, 121), placed opposite each other, wherein the holder (3; 79) comprises a clamping groove (14, 86) which extends in the longitudinal direction (47) of the clamping arrangement (1, 78) and comprises a first clamping surface (6, 90, 56, 69, 116) and a second clamping surface (15, 89), placed opposite each other, wherein the component (2, 79; 80) comprises a clamping tooth (4, 87) which extends in the longitudinal direction (47) of the clamping arrangement (1, 78) and, when the component (2, 79; 80) is fitted onto the holder (3; 79), reaches into the clamping groove (14, 86), which latter comprises a first clamping surface (5, 92, 55, 77, 115) that can cooperate with a clamping surface (9, 93, 60, 75, 121) of the clamping element (8, 82, 58, 68, 117) and further comprises a second clamping surface (13, 88, 109) that is placed opposite the first clamping surface (5, 92, 55, 77, 115) and that can cooperate with a clamping surface (15, 89, 110) of the clamping groove (14, 86), wherein the screw elements (11, 83, 105) can move the clamping element (8, 82, 58, 68, 118) up to the component (2, 79; 80) in order to clamp the component (2, 79; 80) onto the holder (3; 79).

3. The clamping arrangement as claimed in claim 1 or 2, **characterized in that** the positioning slot (16, 81, 43, 46, 57, 66, 67, 117) comprises surfaces (17, 18, 19, 97, 98, 99, 41, 42, 44, 45, 51, 52, 62, 64, 70, 71, 72, 111, 112) which can cooperate with corresponding surfaces of the at least one clamping element (20, 21, 22, 94, 95, 96, 53, 54, 74, 113, 114) to hold the clamping element (8, 82, 58, 68, 118) arranged in the positioning slot (16, 81, 43, 46, 57, 66, 67, 117) in an angular position before the component (2, 79; 80) is clamped onto the holder (3; 79) and/or after the component (2, 79; 80) has been removed from the holder (3; 79).

4. The clamping arrangement as claimed in one of claims 1 to 3, **characterized in that** the positioning slot (16, 81, 43, 46, 57, 66, 67, 117) comprises at least one surface (19, 99, 45, 57, 72, 112) for guiding the clamping element (8, 82, 58, 68, 118) as the clamping element (8, 82, 58, 68, 118) is transversely fitted into or removed from the positioning slot (16, 81, 43, 46, 57, 66, 67, 117).

5. The clamping arrangement as claimed in one of claims 1 to 4, **characterized by** a surface (19, 99, 45, 57, 72, 112) of the positioning slot (16, 81, 43, 46, 57, 66, 67, 117) and a clamping surface (6, 90, 56, 69, 116) of the clamping groove (14, 86) of the holder (3; 79) for guiding the clamping element (8, 82, 58, 68, 118) as the clamping element (8, 82, 58, 68, 118) is transversely fitted into or removed from the positioning slot (16, 81, 43, 46, 57, 66, 67, 117).

6. The clamping arrangement as claimed in claim 5, **characterized in that** the surface (19, 99, 45, 57, 72, 112) of the positioning slot (16, 81, 43, 46, 57, 66, 67, 117) and the clamping surface (6, 90, 56, 69, 116) of the clamping groove (14, 86) of the holder (3; 79) for guiding the clamping element (8, 82, 58, 68, 118) are placed roughly parallel to each other.

7. The clamping arrangement as claimed in claim 5, **characterized in that** the surface (52) of the positioning slot (57) for guiding the clamping element (58) and the clamping surface (56) of the clamping groove (14, 86) of the holder (3; 79) placed at an acute angle to each other, which widens in the direction of the opening of where the clamping element (58) can be fitted transversely into the positioning slot (57).

8. The clamping arrangement as claimed in one of claims 1 to 7, **characterized in that** the cross section of the clamping element (8, 82, 58, 68, 118) is a polygon.

9. The clamping arrangement as claimed in one of claims 1 to 8, **characterized in that** the cross section of the clamping lement (8, 82) is a hexagon.

10. The clamping arrangement as claimed in one of claims 1 to 9, **characterized in that** clamping arrangement (1, 78) comprises at least two screw elements (11, 83, 105).

11. The clamping arrangement as claimed in one of claims 1 to 10, **characterised in that** the clamping arrangement (1, 78) comprises a clamping element (8, 82, 58, 68, 119), fittable into a clamping groove (14, 86), and screw elements (11, 83, 105) and **in that** the clamping arrangement (1, 78) comprises a positioning slot (16, 81, 43, 46, 57, 66, 67, 117) which is provided in the clamping groove (14, 86) of the holder 3; 79) in the longitudinal direction (47) of the clamping arrangement (1, 78) and comprises surfaces (17, 18, 19, 97, 98, 99, 41, 42, 44, 45, 51, 52, 62, 64, 70, 71, 72, 111, 112) which can cooperate with the clamping element (8, 82, 58, 68, 118) to hold a clamping element (8, 82, 58, 68, 118), arranged in the positioning slot (16, 81,43, 46, 57, 66, 67, 117), before the component (2, 79; 80) is clamped onto the holder (3; 79) and/or after the component (2, 79; 80) has been removed from the holder (3; 79).

12. A method for clamping a component (2, 79; 80) onto a holder (3; 79) in a weaving machine, comprising a clamping arrangement (1, 78) as claimed in one of claims 1 to 11, **characterized in that** the clamping element (8, 82, 58, 68, 118) is fitted transversely into a positioning slot (16, 81, 43, 46, 57, 66, 67, 117), and **in that** the component (2, 79; 80) and the screw elements (11; 83, 105) are then fitted, whereupon the screw elements (11, 83, 105), through openings (12, 122) in the component (2, 79; 80), can cooperate with the clamping element (8, 82, 58, 68, 118) to clamp the component (2, 79; 80) onto the holder (3; 79).

13. A method for removing a component (2, 79; 80) that is arranged on a holder (3; 79) in a weaving machine, comprising a clamping arrangement (1,78) as claimed in one of claims 1 to 11, **characterized in that** the screw elements (11, 83, 105) cooperating with the clamping element (8, 82, 58, 68, 118) and the component (2, 79; 80) through openings (12, 122) in the component (2, 79; 80) are removed, and **in that** the clamping element (8, 82, 58, 68, 118) is then removed transversely from the positioning slot (16, 81, 43, 46, 57, 66, 67, 117).

14. A weaving machine **characterized in that** the weaving machine comprises a clamping arrangement (1, 78) as claimed in one of claims 1 to 11.

## Patentansprüche

1. Eine Klemmanordnung zum Klemmen eines Teils (2, 79; 80) auf einer Halterung (3, 79) einer Webmaschine, enthaltend mindestens ein Klemmelement (8, 82, 58, 68, 118) anordnenbar in einer Klemmnut (14, 86) der Halterung (3, 79) und Schraubelemente (11, 83, 105) zum Befestigen genanntes Klemmelements (8, 82, 58, 68, 118), **dadurch gekennzeichnet, dass** die Klemmnut (14, 86) versehen ist mit einem in einer Längsrichtung der Klemmnut (14, 86) erstreckenden Positionierungsschlitz (16, 81, 43, 46, 57, 66, 67, 117) und enthaltend Flächen (41, 42, 44, 45, 51, 52, 62, 64, 111, 112) die mit korrespondierenden Flächen (20, 22, 53, 54, 113, 114) zusammenarbeiten können des mindestens ein Klemmelement (8, 82, 58, 118) zum Ausrichten genanntes in dem Positionierungsschlitz (43, 46, 57, 66, 117) angeordneten Klemmelements (8, 82, 58, 118), bezüglich der Achse (50) der Schraubelemente (11, 83, 105), die hindurch Öffnungen (12, 122) in den Teil (2, 79, 80) angebracht werden können, während der Schraubelemente (11, 83, 105) gelockert sind, welche mindestens ein Klemmelement (8, 82, 58, 68, 118) auch Klemmflächen hat eine von denen zusammenarbeitet mit dem Teil (2, 79; 80) und eine von denen zusammenarbeitet mit der Halterung (3, 79) während der Schraubelemente (11, 83, 105) angezogen sind.

2. Die Klemmanordnung nach Anspruch 1, **dadurch gekennzeichnet, dass** das Klemmelement (8, 82, 58, 68, 118) eine erste Klemmfläche (10, 91, 59, 73, 120) und eine zweite Klemmfläche (9, 93, 60, 75, 121) enthält, einander gegenüber angeordnet, wobei die Halterung (3; 79) eine in der Längsrichtung (47) der Klemmanordnung (1, 78) erstreckende Klemmnut (14, 86) enthält und eine erste Klemmfläche (6, 90, 56, 69, 116) und eine zweite Klemmfläche (15, 89) enthält, einander gegenüber angeordnet, wobei der Teil (2, 79; 80) einen in der Längsrichtung (47) der Klemmanordnung (1, 78) erstreckenden Klemmzahn (4, 87) enthält und, wenn den Teil (2, 79; 80) auf der Halterung (3; 79) angebracht ist, in die Klemmnut (14, 86) greift, die Letzte eine erste Klemmfläche (5, 92, 55, 77, 115) enthält die mit einer Klemmfläche (9, 93, 60, 75, 121) des Klemmelements (8, 82, 58, 68, 117) zusammenarbeiten kann, und weiter eine zweite Klemmfläche (13, 88, 109) enthält die gegenüber die erste Klemmfläche (5, 92, 55, 77, 115) angeordnet ist und die mit einer Klemmfläche (15, 89, 110) der Klemmnut (14, 86) zusammenarbeiten kann, wobei die Schraubelemente (11, 83, 105) das Klemmelement (8, 82, 58, 68, 118) bis zum Teil (2, 79; 80) bewegen können um den Teil (2, 79; 80) auf die Halterung (3; 79) zu klemmen.

3. Die Klemmanordnung nach Anspruch 1 oder 2, **dadurch gekennzeichnet, dass** der Positionierungsschlitz (16, 81, 43, 46, 57, 66, 67, 117) Flächen (17, 18, 19, 97, 98, 99, 41, 42, 44, 45, 51, 52, 62, 64, 70, 71, 72, 111, 112) enthält die mit korrespondierenden Flächen des mindestens ein Klemmelement (20, 21, 22, 94, 95, 96, 53, 54, 74, 113, 114) zusammenarbeiten können um das in dem Positionierungsschlitz (16, 81, 43, 46, 57, 66, 67, 117) angeordnete Klemmelement (8, 82, 58, 68, 118) in eine Winkelposition zu halten bevor dem Teil (2, 79; 80) auf der Halterung (3; 79) geklemmt ist und/oder nach dem Teil (2, 79; 80) von der Halterung (3; 79) entfernt worden ist.

4. Die Klemmanordnung nach einem der Ansprüche 1 bis 3, **dadurch gekennzeichnet, dass** der Positionierungsschlitz (16, 81, 43, 46, 57, 66, 67, 117) mindestens eine Fläche (19, 99, 45, 57, 72, 112) enthält zum Führen des Klemmelements (8, 82, 58, 68, 118) während das Klemmelement (8, 82, 58, 68, 118) quer angebracht wird in oder entfernt wird aus dem Positionierungsschlitz (16, 81, 43, 46, 57, 66, 67, 117).

5. Die Klemmanordnung nach einem der Ansprüche 1 bis 4, **gekennzeichnet durch** eine Fläche (19, 99, 45, 57, 72, 112) des Positionierungsschlitzes (16, 81, 43, 46, 57, 66, 67, 117) und eine Klemmfläche (6, 90, 56, 69, 116) der Klemmnut (14, 86) der Halterung (3; 79) zum Führen des Klemmelements (8, 82, 58, 68, 118) während das Klemmelement (8, 82, 58, 68, 118) quer angebracht wird in oder entfernt wird aus dem Positionierungsschlitz (16, 81, 43, 46, 57, 66, 67, 117).

6. Die Klemmanordnung nach Anspruch 5, **dadurch gekennzeichnet, dass** die Fläche (19, 99, 45, 57, 72, 112) des Positionierungsschlitzes (16, 81, 43, 46, 57, 66, 67, 117) und die Klemmfläche (6, 90, 56, 69, 116) der Klemmnut (14, 86) der Halterung (3; 79) zum Führen des Klemmelements (8, 82, 58, 68, 118) etwa parallel zueinander angeordnet sind.

7. Die Klemmanordnung nach Anspruch 5, **dadurch gekennzeichnet, dass** die Fläche (52) des Positionierungsschlitzes (57) zum Führen des Klemmelements (58) und die Klemmfläche (56) der Klemmnut (14, 86) der Halterung (3; 79) in einem spitzen Winkel zueinander angeordnet sind, der erweitert in der Richtung der Öffnung von wo das Klemmelement (58) quer in den Positionierungsschlitz (57) angebracht werden kann.

8. Die Klemmanordnung nach einem der Ansprüche 1 bis 7, **dadurch gekennzeichnet, dass** der Querschnitt des Klemmelements (8, 82, 58, 68, 118) ein Polygon ist.

9. Die Klemmanordnung nach einem der Ansprüche 1 bis 8, **dadurch gekennzeichnet, dass** der Querschnitt des Klemmelements (8, 82) ein Sechseck ist.

10. Die Klemmanordnung nach einem der Ansprüche 1 bis 9, **dadurch gekennzeichnet, dass** die Klemmanordnung (1, 78) mindestens zwei Schraubelemente (11, 83, 105) enthält.

11. Die Klemmanordnung nach einem der Ansprüche 1 bis 10, **dadurch gekennzeichnet, dass** die Klemmanordnung (1, 78) ein Klemmelement (8, 82, 58, 68, 119), die in eine Klemmnut (14, 86) anbringbar ist, und Schraubelemente (11, 83, 105) enthält, und dass die Klemmanordnung (1, 78) einen Positionierungsschlitz (16, 81, 43, 46, 57, 66, 67, 117) enthält der in der Klemmnut (14, 86) der Halterung (3; 79) in der Längsrichtung (47) der Klemmanordnung (1, 78) versehen ist, und Flächen (17, 18, 19, 97, 98, 99, 41, 42, 44, 45, 51, 52, 62, 64, 70, 71, 72, 111, 112) enthält die mit dem Klemmelement (8, 82, 58, 68, 118) zusammenarbeiten können zum Halten eines in dem Positionierungsschlitz (16, 81, 43, 46, 57, 66, 67, 117) angeordneten Klemmelements (8, 82, 58, 68, 118), bevor dem Teil (2, 79; 80) auf der Halterung (3; 79) geklemmt wird und/oder nach dem Teil (2, 79; 80) von der Halterung (3; 79) entfernt worden ist.

12. Ein Verfahren zum Klemmen eines Teils (2, 79; 80) auf einer Halterung (3; 79) in einer Webmaschine, enthaltend eine Klemmanordnung (1, 78) nach einem der Ansprüche 1 bis 11, **dadurch gekennzeichnet, dass** das Klemmelement (8, 82, 58, 68, 118) quer in einen Positionierungsschlitz (16, 81, 43, 46, 57, 66, 67, 117) angebracht ist, und dass der Teil (2, 79; 80) und die Schraubelemente (11, 83, 105) dann angebracht werden, wobei die Schraubelemente (11, 83, 105), hindurch Öffnungen (12, 122) in dem Teil (2, 79; 80), zusammenarbeiten können mit dem Klemmelement (8, 82, 58, 68, 118) zum Klemmen des Teils (2, 79; 80) auf der Halterung (3; 79).

13. Ein Verfahren zum Entfernen eines Teils (2, 79; 80) der auf einer Halterung (3; 79) in einer Webmaschine angeordnet ist, enthaltend eine Klemmanordnung (1, 78) nach einem der Ansprüche 1 bis 11, **dadurch gekennzeichnet, dass** die Schraubelemente (11, 83, 105) zusammenarbeiten mit dem Klemmelement (8, 82, 58, 68, 118) und dem Teil (2, 79; 80) hindurch Öffnungen (12, 122) in dem Teil (2, 79; 80) entfernt werden, und dass das Klemmelement (8, 82, 58, 68, 118) dann quer aus dem Positionierungsschlitz (16, 81, 43, 46, 57, 66, 67, 117) entfernt wird.

14. Eine Webmaschine **dadurch gekennzeichnet, dass** die Webmaschine eine Klemmanordnung (1, 78) nach einem der Ansprüche 1 bis 11 enthält.

## Revendications

1. Un dispositif de serrage pour serrer une partie (2, 79; 80) sur un support (3, 79) d'une machine à tisser, comprenant au moins un élément de serrage (8, 82, 58, 68, 118) pouvant être disposé dans une rainure de serrage (14, 86) du support (3; 79) et des éléments filetés (11, 83, 105) pour fixer ledit élément de serrage (8, 82, 58, 68, 118), **caractérisé en ce que** la rainure de serrage (14, 86) est prévue d'une fente de positionnement (16, 81, 43, 46, 57, 66, 67, 117) s'étendant en une direction longitudinale de la rainure de serrage (14, 86) et comprenant des surfaces (41, 42, 44, 45, 51, 52, 62, 64, 111, 112) qui peuvent coopérer avec des surfaces correspondantes (20, 22, 53, 54, 113, 114) d'au moins un élément de serrage (8, 82, 58, 118) pour aligner ledit élément de serrage (8, 82, 58, 118), disposé dans la fente de positionnement (43, 46, 57, 66, 117), par rapport à l'axe (50) des éléments filetés (11, 83, 105) qui peuvent être montés à travers des ouvertures (12, 122) dans la partie (2, 79, 80) tandis que les éléments filetés (11, 83, 105) sont détachés, qu'au moins un élément de serrage (8, 82, 58, 68, 118) présente aussi des surfaces de serrage dont un coopère avec la partie (2, 79; 80) et dont un coopère avec le support (3, 79) tandis que les éléments filetés (11, 83, 105) sont reserrés.

2. Le dispositif de serrage selon la revendication 1, **caractérisé en ce que** l'élément de serrage (8, 82, 58, 68, 118) comprend une première surface de serrage (10, 91, 59, 73, 120) et une deuxième surface de serrage (9, 93, 60, 75, 121), disposées face à face, dans lequel le support (3; 79) comprend une rainure de serrage (14, 86) qui s'étend en la direction longitudinale (47) du dispositif de serrage (1, 78) et comprend une première surface de serrage (6, 90, 56, 69, 116) et une deuxième surface de serrage (15, 89), disposées face à face, dans lequel la partie (2, 79; 80) comprend un dent de serrage (4, 87) qui s'étend en la direction longitudinale (47) du dispositif de serrage (1, 78) et, si la partie (2, 79; 80) est montée sur le support (3; 79) atteint dans la rainure de serrage (14, 86), ce dernier comprend une première surface de serrage (5, 92, 55, 77, 115) qui peut coopérer avec une surface de serrage (9, 93, 60, 75, 121) de l'élément de serrage (8, 82, 58, 68, 117), et comprend encore une deuxième surface de serrage (13, 88, 109) qui est disposée en face de la première surface de serrage (5, 92, 55, 77, 115) et qui peut coopérer avec une surface de serrage (15, 89, 110) de la rainure de serrage (14, 86), dans lequel les éléments filetés (11, 83, 105) peuvent déplacer l'élément de serrage (8, 82, 58, 68, 118) jusqu'à la partie (2, 79; 80) pour serrer la partie (2, 79; 80) sur le support (3; 79).

3. Le dispositif de serrage selon la revendication 1 ou 2, **caractérisé en ce que** la fente de positionnement (16, 81, 43, 46, 57, 66, 67, 117) comprend des surfaces (17, 18, 19, 97, 98, 99, 41, 42, 44, 45, 51, 52, 62, 64, 70, 71, 72, 111, 112) qui peuvent coopérer avec des surfaces correspondantes d'au moins un élément de serrage (20, 21, 22, 94, 95, 96, 53, 54, 74, 113, 114) pour maintenir l'élément de serrage (8, 82, 58, 68, 118) disposé dans la fente de positionnement (16, 81, 43, 46, 57, 66, 67, 117) dans une position angulaire avant que la partie (2, 79; 80) est serrée sur le support (3; 79) et/ou après que la partie (2, 79; 80) a été enlevée du support (3; 79).

4. Le dispositif de serrage selon l'une quelconque des revendications 1 à 3, **caractérisé en ce que** la fente de positionnement (16, 81, 43, 46, 57, 66, 67, 117) comprend au moins une surface (19, 99, 45, 57, 72, 112) pour guider l'élément de serrage (8, 82, 58, 68, 118) pendant que l'élément de serrage (8, 82, 58, 68, 118) est monté transversalement dans ou enlevé de la fente de positionnement (16, 81, 43, 46, 57, 66, 67, 117).

5. Le dispositif de serrage selon l'une quelconque des revendications 1 à 4, **caractérisé par** une surface (19, 99, 45, 57, 72, 112) de la fente de positionnement (16, 81, 43, 46, 57, 66, 67, 117) et une surface de serrage (6, 90, 56, 69, 116) de la rainure de serrage (14, 86) du support (3; 79) pour guider l'élément de serrage (8, 82, 58, 68, 118) pendant que l'élément de serrage (8, 82, 58, 68, 118) est monté transversalement dans ou enlevé de la fente de positionnement (16, 81, 43, 46, 57, 66, 67, 117).

6. Le dispositif de serrage selon la revendication 5, **caractérisé en ce que** la surface (19, 99, 45, 57, 72, 112) de la fente de positionnement (16, 81, 43, 46, 57, 66, 67, 117) et la surface de serrage (6, 90, 56, 69, 116) de la rainure de serrage (14, 86) du support (3, 79) pour guider l'élément de serrage (8, 82, 58, 68, 118) sont disposées prèsque parallèlement les uns aux autres.

7. Le dispositif de serrage selon la revendication 5, **caractérisé en ce que** la surface (52) de la fente de positionnement (57) pour guider l'élément de serrage (58) et la surface de serrage (56) de la rainure de serrage (14, 86) du support (3; 79) disposée à un angle aigu les uns aux autres, qui s'élarge en la direction de l'ouverture d'où l'élément de serrage (58) peut être monté transversalement dans la fente de positionnement (57).

8. Le dispositif de serrage selon l'une quelconque des revendications 1 à 7, **caractérisé en ce que** la section transversale de l'élément de serrage (8, 82, 58, 68, 118) est un polygone.

9. Le dispositif de serrage selon l'une quelconque des revendications 1 à 8, **caractérisé en ce que** la section transversale de l'élément de serrage (8, 82) est un hexagone.

10. Le dispositif de serrage selon l'une quelconque des revendications 1 à 9, **caractérisé en ce que** le dispositif de serrage (1, 78) comprend au moins deux éléments filetés (11, 83, 105).

11. Le dispositif de serrage selon l'une quelconque des revendications 1 à 10, **caractérisé en ce que** le dispositif de serrage (1, 78) comprend un élément de serrage (8, 82, 58, 68, 119) qui peut être monté dans une rainure de serrage (14, 86), et des éléments filetés (11, 83, 105), et **en ce que** le dispositif de serrage (1, 78) comprend une fente de positionnement (16, 81, 43, 46, 57, 66, 67, 117) qui est prévue dans le rainure de serrage (14, 86) du support (3; 79) en la direction longitudinale (47) du dispositif de serrage (1, 78), et comprend des surfaces (17, 18, 19, 97, 98, 99, 41, 42, 44, 45, 51, 52, 62, 64, 70, 71, 72, 111, 112) qui peuvent coopérer avec l'élément de serrage (8, 82, 58, 68, 118) pour maintenir un élément de serrage (8, 82, 58, 68, 118), disposé dans la fente de positionnement (16, 81, 43, 46, 57, 66, 67, 117), avant que la partie (2, 79; 80) est serrée sur le support (3; 79) et/ou après que la partie (2, 79; 80) a été enlevée du support (3, 79).

12. Un procédé pour serrer une partie (2, 79; 80) sur un support (3; 79) dans une machine à tisser, comprenant un dispositif de serrage (1, 78) selon l'une quelconque des revendications 1 à 11, **caractérisé en ce que** l'élément de serrage (8, 82, 58, 68, 118) est monté transversalement dans une fente de positionnement (16, 81, 43, 46, 57, 66, 67, 117), et **en ce que** la partie (2, 79; 80) et les éléments filetés (11, 83, 105) sont ensuite montés, par lequel les éléments filetés (11, 83, 105), à travers des ouvertures (12, 122) dans la partie (2, 79; 80) peuvent coopérer avec l'élément de serrage (8, 82, 58, 68, 118) pour le serrer la pièce (2, 79; 80) sur le support (3; 79).

13. Un procédé pour enlever une partie (2, 79; 80) qui est disposée sur un support (3; 79) dans une machine à tisser, comprenant un dispositif de serrage (1, 78) selon l'une quelconque des revendications 1 à 11, **caractérisé en ce que** les éléments filetés (11, 83, 105) coopérant avec l'élément de serrage (8, 82, 58, 68, 118) et la partie (2, 79; 80) à travers des ouvertures (12, 122) dans la partie (2, 79; 80) sont enlevés, et **en ce que** l'élément de serrage (8, 82, 58, 68, 118), est enlevé ensuite transversalement de la fente de positionnement (16, 81, 43, 46, 57, 66, 67, 117).

14. Une machine à tisser, **caractérisée en ce que** la machine à tisser comprend un dispositif de serrage (1, 78) selon l'une quelconque des revendications 1 à 11.
